# EUROPEAN PATENT APPLICATION

(11) **EP 3 318 515 A1**
(43) Date of publication of application: **09.05.2018**
(21) Application number: 16382505.2
(22) Date of filing: 02.11.2016
(51) Int. Cl.: B65G 17/08, B65G 17/40

(54) **CONVEYOR BELT MODULE AND CONVEYOR BELT**

(71) Applicant: Transmisiones Mecanicas AVE S.A., 08940 Cornella de Llobregat (ES)
(72) Inventor: Vera, Javier, 08940 Cornella de LL. (Barcelona) (ES)
(74) Representative: Grünecker Patent- und Rechtsanwälte PartG mbB

(57) **Abstract**

Conveyor belt module (100) comprising: a body (101); a first rod receiving element (102) comprising two substantially opposing surfaces; wherein a through hole (121) is provided extending from the first surface (122) to the second surface (123); wherein the through hole has an extension (E1) parallel to the conveying direction; an outermost rod receiving element (103) comprising two substantially opposing surfaces; wherein a through hole (131) is provided extending from the third surface (132) to the fourth surface (133); wherein the through hole has an extension (E2) parallel to the conveying direction;
wherein the extension of through hole of the outermost rod receiving element (E2) is smaller than the extension of the through hole of the first rod receiving element (E1); and
wherein the cross-sections of the through hole in the outermost rod receiving element and the through hole in the first rod receiving element overlap partially in a view along the direction of the longitudinal axis; and a conveyor belt comprising a plurality of conveyor belt modules.

## Description

The present invention relates to a conveyor belt module as claimed in claim 1 and a conveyor belt comprising at least two conveyor belt modules according to claim 10.

### Prior art

Conveyor belts comprised of conveyor belt modules are commonly known in the art. Each module can be manufactured from a plurality of materials like metals, alloys or plastic materials. The conveyor belt modules forming the actual conveyor belt can be connected with each other by inserting elongated rods in rod receiving elements provided for this purpose and positioned on either side of each conveyor belt module.

In conveyor belt modules of the prior art, the elongated rod can usually be inserted into the conveyor belt modules in an irreversible manner, i.e. without the possibility to remove the elongated rods once inserted, or they can only be removed from the conveyor belt modules with difficulties once inserted.

### Problem

Thus, starting from the known prior art, the objective technical problem to be solved by the present invention is to provide conveyor belt modules that can be linked with each other in a reliable manner using an elongated rod while allowing for easier removal of the elongated rod.

### Solution

This problem is solved by the conveyor belt module according to independent claim 1 and the conveyor belt comprising at least two conveyor belt modules according to claim 10. Preferred embodiments of the invention are provided in the dependent claims.

The conveyor belt module according to the invention comprises a body and a first rod receiving element extending laterally from the body and comprising two substantially opposing surfaces. A through hole is provided extending from the first surface to the second surface that form the substantially opposing surfaces of the first rod receiving element and a longitudinal axis of the through hole extending from the first surface to the second surface is perpendicular to a conveying direction of the conveyor belt module. The through hole has an extension perpendicular to the longitudinal axis and in parallel to the conveying direction of the conveyor belt module. Furthermore, an outermost rod receiving element extending laterally from the body and comprising two substantially opposing surfaces is provided, wherein a through hole is provided extending from a third surface and a fourth surface forming the two substantially opposing surfaces of the outermost rod receiving element and a longitudinal axis of the through hole extends from the third surface to the fourth surface in parallel to the longitudinal axis of the first rod receiving element. The through hole of the outermost rod receiving element has an extension perpendicular to the longitudinal axis and in parallel to the conveying direction of the conveyor belt module. The extension of the through hole of the outermost rod receiving element is smaller than the extension of the through hole of the first rod receiving element and the cross-sections perpendicular to the longitudinal axis of the through hole in the outermost rod receiving element and the through hole in the first rod receiving element overlap partially in a view along the direction of the longitudinal axis.

In the context of the invention, the substantially opposing surfaces of the first rod receiving element and the outermost rod receiving element do not necessarily have to be arranged in parallel to each other. They do also not need to be formed as plane surfaces but can also be provided as curved surfaces or in any other fashion. The only requirement of the substantially opposing surfaces is that they are provided at the first rod receiving element and the outermost rod receiving element, respectively, and are provided on opposite sides of these elements. Furthermore, there is no prerequisite provided according to the invention for a spatial relationship between the opposing surfaces of the first rod receiving element and the opposing surfaces of the outermost rod receiving element. There can be any angular arrangement of the opposing surfaces of the outermost rod receiving element to the opposing surfaces of the first rod receiving element.

Additionally, the longitudinal axes referred to do not necessarily represent any axes of symmetry of the through hole or extend along the dimension of the through hole having the largest extension. Furthermore, the longitudinal axis do not necessarily have to be provided perpendicular to the opposing surfaces of the respective first rod receiving element or the outermost rod receiving element.

Additionally, the through hole provided in the first rod receiving element and the outermost rod receiving element can have any cross-section and is not limited to a particular shape like circular or elliptical.

Furthermore, it is noted that the partial overlap of the cross-sections perpendicular to the longitudinal axis of the through hole in the outermost rod receiving element and the through hole in the first rod receiving element in a view along the direction of the longitudinal axis does not require that the cross-sections actually overlap. In fact, since the first rod receiving element and the outermost rod receiving element are provided at the body usually with a distance to each other, the respective cross-sections do not overlap in that part of the cross-section in the first rod receiving element is part of the cross-section in the outermost rod receiving element. What should be understood by this term is that when the through holes are viewed along a direction of one of the longitudinal axis, the cross-section in the outermost rod receiving element appears to overlap the cross-section in the first rod receiving element. In other words, when a light beam is emitted from outside the conveyor belt module in the direction of one of the longitudinal axis, there are cases where the light beam can travel through the through hole in the outermost rod receiving element and through the through hole in the first rod receiving element. The portion of the cross-section of the through hole in the outermost rod receiving element and the portion of the hole in the first rod receiving element for which this condition is met constitute to the partial overlap of the cross-sections according to the invention.

By providing a conveyor belt module according to the present invention, it is possible to insert an elongated rod into the through holes of at least the outermost rod receiving element and the first rod receiving element and to establish a connection between adjacent conveyor belt modules when inserting such a rod. This connection is reliable as long as the conveyor belt formed by these means experiences some pull in the conveying direction. Thereby, the conveyor belt modules are displaced with respect to each other in the conveying direction depending on the extension of the through hole in the first rod receiving element of each conveyor belt module and the extension of the rod. Thereby, the elongated rod is prevented from dropping out of the through holes in the outermost rod receiving elements since it can no longer move through the through hole in the outermost rod receiving element of each conveyor belt module. When the pull in the conveying direction is removed, however, the conveyor belt modules can be moved with respect to each other such that the elongated rod can be removed easily without damage to the elongated rod or the conveyor belt modules.

Thereby, a reliable connection of conveyor belt modules is provided while still allowing for easy removal of the elongated rod.

In one embodiment, the through hole in the outermost rod receiving element has a cylindrical shape with a circular cross-section perpendicular to the longitudinal axis of the through hole in the outermost rod receiving element and/or the through hole in the first rod receiving element has a cylindrical shape with an elliptical cross-section perpendicular to the longitudinal axis of the through hole in the first rod receiving element. Thereby, an elongated rod having, for example, a circular cross-section perpendicular to its longitudinal axis can be used to connect conveyor belt modules with each other. Furthermore, rotation of the conveyor belt modules around the axis of rotation defined by the elongated rod is possible with this embodiment.

In another preferred embodiment, the extension of the through hole of the first rod receiving element and/or the extension of the through hole of the outermost rod receiving element varies or is constant or is at least partially constant in the direction of the longitudinal axis.

This means that it is not required that the through hole has a cylindrical shape but can have a varying extension. This can vary in any form. It can also be constant or be at least partially constant in that a first section of the through hole along the longitudinal axis has a first extension and a second section of the through hole along the longitudinal axis has a second extension when the first extension and the second extension are different from each other. The extension can also increase or decrease along the direction of the longitudinal axis or can first decrease and then increase.

Thereby, the conveyor belt modules can be adapted to more precisely accommodate the elongated rod such that the elongated rod does not move in parallel to the longitudinal axis while the conveyor belt modules are used in a conveyor belt.

Furthermore, it can be provided that the body has a substantially planar top surface and a substantially planar bottom surface and a height H, wherein the first rod receiving element and/or the outermost rod receiving element extend laterally from the body and have a substantially planar top surface and a substantially planar bottom surface with a height H and further have a fifth surface different from the bottom surface, the top surface and the opposing surfaces, the fifth surface having a semicircle boundary or a semielliptical boundary perpendicular to the longitudinal axis.

This means that when seen in a view along the longitudinal axis, the fifth surface is a curved surface having an outer boundary in the form of a semicircle or a semielliptical curve. It is intended that the fifth surface of the first rod receiving element and the outermost rod receiving element can, but do not need to be identical in shape, form or size.

Producing the conveyor belt modules is simplified when conveyor belt modules are provided with the extensions as claimed as they can be manufactured from a piece of material (for example plastic) by cutting the elements out of the piece of material.

Furthermore, it can be provided that the two substantially opposing surfaces of the first rod receiving element and/or the two substantially opposing surfaces of the outermost rod receiving element are in parallel to each other or come closer to each other with decreasing distance to the body. With the first alternative, production is simplified since it is only necessary to provide straight surfaces. The second alternative can be useful in stabilizing the connection between adjacent conveyor belt modules due to the triangular or conical shapes of adjacent conveyor belt modules that can interlock with each other.

In a further embodiment, the cross-section of the through hole of the outermost rod receiving element completely overlaps with the cross-section of the through hole in the first rod receiving element in the direction of the longitudinal axis.

This is to be understood as the whole area of the cross-section of the through hole of the outermost rod receiving element overlaps with the cross-section of the through hole of the first rod receiving element. However, this does not necessarily require that the whole area of the through hole of the first rod receiving element overlaps with the cross-section of the outermost rod receiving element. In fact, since the extension of the through hole in the first rod receiving element is, according to the invention, intended to be larger than that of the through hole of the outermost rod receiving element, it can be provided, according to at least some embodiments, that also the total area of the cross-section of the through hole of the first rod receiving element is larger than the total area of the cross-section of the outermost rod receiving element.

Thereby, the insertion of an elongated rod through the outermost rod receiving element into the first rod receiving element can be simplified and unintended canting of the elongated rod can be avoided.

It can further be provided that the conveyor belt module comprises a plurality of first rod receiving elements. These rod receiving elements can be identical in shape or can have different shapes/dimensions. Providing more than one first rod receiving element has the advantage that an elongated rod, once inserted in the first rod receiving elements, can be prevented from tilting unintentionally, thereby stabilizing a connection between adjacent conveyor belt modules.

In this regard, it can also be provided that each rod receiving element is separated from a directly adjacent rod receiving element by a distance s. This distance can be equal to or larger than the extension of first rod receiving elements along the longitudinal axis for different conveyor belt modules. Thereby, a recess is provided into which rod receiving elements of an adjacent conveyor belt module can be introduced.

In a further embodiment, the conveyor belt module comprises a second rod receiving element and a second outermost rod receiving element extending laterally from the body on an opposite side of the body as the first rod receiving element and the outermost rod receiving element. Thereby, further conveyor belt modules can be connected on either side of the conveyor belt module in order to assemble a conveyor belt.

A conveyor belt comprising at least two conveyor belt modules according to the previous embodiment is provided according to the invention, the conveyor belt further comprising an elongated rod, wherein the elongated rod extends through the first rod receiving element of a first conveyor belt module and the second rod receiving element of a second conveyor belt module adjacent to the first conveyor belt module, wherein the extension of the elongated rod is equal to or smaller than the extension of the through holes in the first and second outermost rod receiving elements. A thus provided conveyor belt is reliable during use for conveyor objects and can also be separated into the constituting conveyor belt modules in an easy manner.

### Brief description of the figures

- Figures 1a-1c: show schematic depictions of a conveyor belt module according to one embodiment under different directions of view
- Figures 2a- 2c: show schematic depictions of the process for creating a conveyor belt from two or more conveyor belt modules according to one embodiment
- Figure 3: shows a top view of a further embodiment of a conveyor belt module
- Figure 4: shows a side view of a further embodiment of a conveyor belt module
- Figures 5a+5b: show top views of conveyor belt modules according to different embodiments
- Figures 6a-6c: show views of rod receiving elements with through holes according to some embodiments

### Detailed description

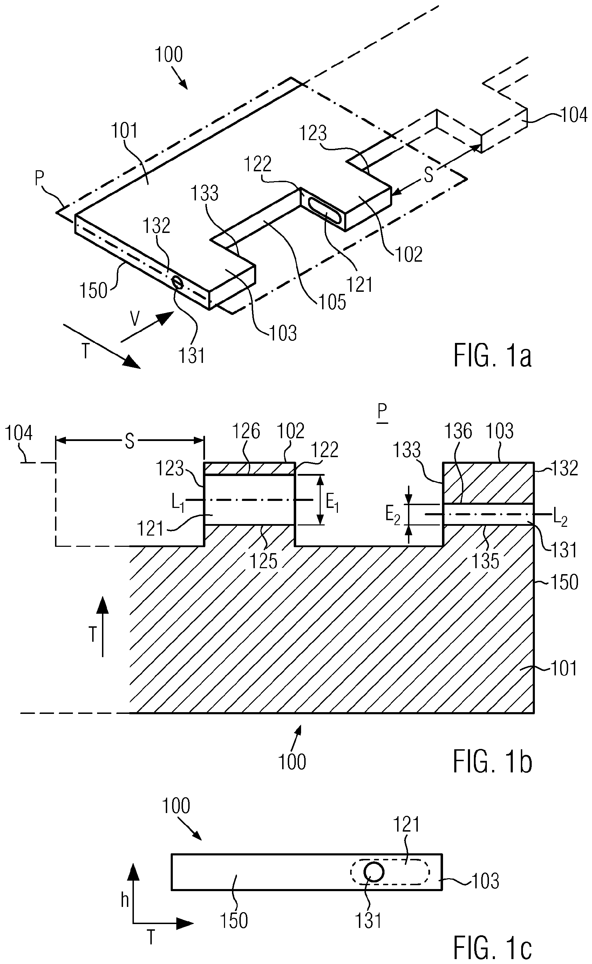

Figure 1 shows a schematic depiction of a conveyor belt module 100 according to one embodiment. The conveyor belt module according to this embodiment comprises a body 101. This body is depicted as having a generally rectangular shape. This, however, is not intended to be limiting. In fact, the body 101 may have any shape, form or size.

From this body 101, a first rod receiving element 102 extends laterally in a transport direction T in which the conveyor belt module may be moved during use in a conveyor belt. The first rod receiving element 102 is constituted from a body having any shape (depicted in figure 1 a as rectangular shape) but having at least two opposing surfaces. The first surface is denoted with 122 and the second surface is denoted with 123. While, in the embodiment depicted in figure 1a, the surfaces extend in parallel to each other, this is not mandatory.

Through the surfaces 122 and 123, a through hole 121 is provided. This through hole extends through the first rod receiving element completely, i.e. an opening is provided in the first surface 122 and another opening is provided in the second surface 123 wherein there is no material in between these openings within the region of the through hole.

The first rod receiving element is provided at the body 101 at any side of the body showing in the direction of the transport direction T. This may be considered to be an arrangement laterally at the body 101. The position of the first rod receiving element 102 in a longitudinal direction as denoted with v may be arbitrary but may not be at the outermost edge of the body 101.

As depicted in figure 1a, there may be provided a further first rod receiving element denoted with 104. The number of first rod receiving elements 102 and 104 is not limited and may be 1, 2, 5 or up to 10. The number, however, is not limited in any way. The elements 102 and 104 may be separated by a recess having an extension s in the direction v.

Additionally, separated from the first rod receiving element 102 by a recess 105, an outermost rod receiving element 103 is provided. In the context of the present invention, the outermost rod receiving element 103 is also provided laterally at the body 101. The outermost rod receiving element may be arranged at the outermost edge 150 (or the opposing edge not depicted in figure 1 a) of the body 101. However, this is not mandatory. According to the invention, it is intended that the outermost rod receiving element 103 is, in any case, the first element encountered when starting from the edge 150 (or the opposing edge) and moving in the direction denoted with v.

Like the first rod receiving element, the outermost rod receiving element 103 is of any shape but comprises at least two opposing surfaces. The surfaces are depicted with 132 and 133 and may be referred to as third and fourth surfaces. Herein, the third surface may be considered the surface closest to edge 150.

A through hole 131 is provided in the outermost rod receiving element through the third surface and fourth surface. Like for the first rod receiving element, the through hole 131 extends completely through the outermost rod receiving element in that there is no material within the region of the through hole 131 between the opposing surfaces 132 and 133 and openings of the through hole are provided in the opposing surfaces 132 and 133.

Figure 1b depicts a further view of the conveyor belt module depicted in figure 1 a wherein the view is provided as a planar cut through the conveyor belt module 100 depicted in figure 1a along the plane denoted with P. This plane extends through the conveyor belt module 100 and the directions (direction vectors) of the plane are given by the directions T and v. The cut through the conveyor belt module 100 is further provided such that it cuts through the through holes where the through holes have their greatest extension in the direction T. This is provided under the assumption that the greatest extension of the through holes 131 and 121 along the direction T is provided in the same horizontal plane without this being limiting. In fact, the through holes through the first rod receiving element and the outermost rod receiving element, respectively, may have their greatest extensions in different heights perpendicular to the plane provided by the directions v and T. for simplicity of explanation, however, it will be assumed in the following that the greatest extension in the direction T lies in the same height for the through holes 121 and 131. The depiction in figures 1a to 1c may therefore be regarded to only be exemplarily but not limiting.

Figure 1b depicts the same features of the conveyor belt module as depicted in figure 1 a. The body 101 is shown having the first rod receiving portion 102 and the outermost rod receiving portion 103 extending therefrom laterally and being provided with through holes as described previously.

As can be seen in figure 1b, according to the invention, the through hole in the first rod receiving element has an extension E1 in parallel to the direction T and the through hole 131 in the outermost rod receiving element 103 has an extension E2 in the direction T. The extensions E1 and E2 are not equal in that the extension E2 is smaller than the extension E1. The extensions E1 and E2 are measured in parallel to the direction T and perpendicular to the longitudinal axis L1 and L2 of the first rod receiving element 102 and the outermost rod receiving element 103, respectively.

As can be seen from figure 1b, the longitudinal axis of the through holes 131 and 121 are in parallel to each other. However, they do not necessarily fall together in that the longitudinal axis L1 and the longitudinal axis L2 are identical. They can be separated by any distance in the direction T as long as the requirement that the cross-sections of the through holes 131 and 121 at least partially overlap is fulfilled.

In this regard, it may be noted that the longitudinal axes L1 and L2 may be assumed to go through the center of the through holes in the first rod receiving element and the outermost rod receiving element, respectively. This, however, is not limiting and only provided for exemplary purpose. In fact, since the shape of the through holes is not limited to a circular or elliptical or otherwise regular shape, no such center may actually exist in some embodiments. The longitudinal axes L1 and L2 may, therefore, be defined such that they run from one of the opposing surfaces to the other of the opposing surfaces in the respective first rod receiving element and outermost rod receiving element and run in parallel to each other. This definition can be applied to regular but also irregular shapes of the through holes and is also independent from the spatial relationship between the opposing surfaces of the first rod receiving element and the outermost rod receiving element, respectively.

The spatial relationship between the through holes 131 and 121 can also be arbitrary. However, in order to achieve the intended purpose that an elongated rod can be reversibly placed in the through holes of adjacent conveyor belt modules in order to connect them while, at the same time, achieving a reliable connection between the adjacent conveyor belt modules, some embodiments are preferred.

In this regard, it is noted that figure 1b depicts the through holes 121 and 131 having boundaries 125 and 126 (for through hole 121) and 135 and 136 (for through hole 131). These boundaries actually limit the through holes in the direction T. In a preferred embodiment, the boundaries 125 and 135 are substantially in identical positions with respect to the direction T. Assuming that the direction T represents a y-coordinate of a coordinate system, the Y coordinates of the boundaries 125 and 135 may be substantially the same in this coordinate system. In this regard, the term "substantially" should be construed as "identical" in case of regular shapes of the through holes (especially cylindrical and/or elliptical or rectangular). In any other case, the term "substantially" may also encompass some deviations in that the "Y coordinates" of the boundaries 125 and 135 are not identical over the whole extension of the through holes 121 and 131 in the direction of the longitudinal axes L1 and L2, respectively.

Since the extension E2 is, according to the invention, smaller than the extension E1, the boundaries 126 and 136 of the through holes 121 and 131, respectively, do necessarily not have the same "Y coordinates" in this embodiment. This means that, when moving along the direction T, the through hole 131 and ends earlier than the through hole 121. In other words, a light beam traveling in parallel to the longitudinal axis L1 and being shifted along the direction T will, when passing the boundary 125 in the direction T pass through the through hole 131 for the distance E2 but will not pass through the through hole 131 while still passing through the through hole 121 for a distance E1 - E2 in the direction T.

Furthermore, as can be seen in figure 1b, each first rod receiving element 102 can be separated from another first rod receiving element 104 (depicted with dashed lines) by a distance s. This distance may be identical to the extension of the first rod receiving element 102 in the direction of the longitudinal axis L1. Correspondingly, the first rod receiving element may be displaced or separated to the outermost rod receiving element by an identical distance or another distance. The separation may have the form of a recess into which a corresponding first rod receiving element of another conveyor belt module can be inserted in order to establish a connection between adjacent conveyor belt modules when forming a conveyor belt with the conveyor belt modules.

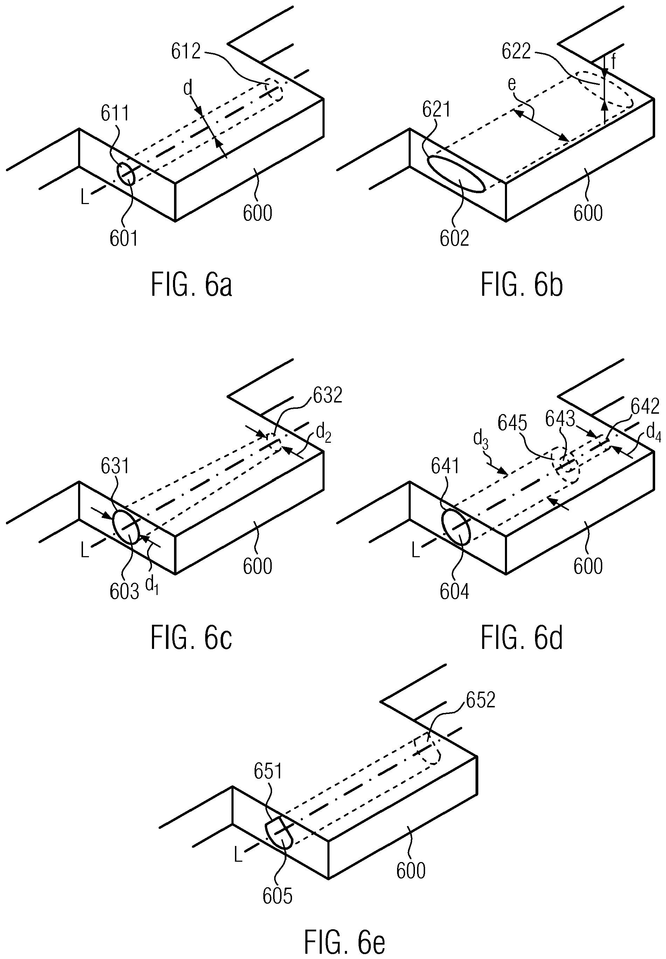

Other embodiments of the through holes can also be thought of and will be described with reference to figure 6 in more detail.

Figure 1c depicts the conveyor belt module 100 when seen in the direction v from outside of surface 150. The view of the first rod receiving element 102 as depicted in figures 1 a and 1 b is, therefore, substantially blocked by the outermost rod receiving element 103. The through hole 131 through the outermost rod receiving element 103 is visible in this depiction. The through hole 121 through the first rod receiving element 102 is only depicted with the dashed lines. Figure 1c is intended to show the overlap of the cross-sections of the through holes of the first rod receiving element and the outermost rod receiving element when seen in the direction v. as can be seen, the cross-sections of the through hole 131 and 121 partially overlap in that the cross-section of the through hole 131, in this embodiment, is completely within the cross-section of the through hole 121. This, however, is not limiting. While the cross-section of the through hole 131 is, according to the invention, preferably smaller than the cross-section of the through hole 121, the through holes 121 and 131 do not necessarily overlap such that the cross-section of 131 completely lies within the cross-section 121.

When seen from the direction v, the cross-section of the through hole 131 may only partially overlap with the cross-section of the through hole 121, in some embodiments. For example, half of the cross-section of the through hole 131 may overlap with the cross-section of the through hole 121. Furthermore, there may be a complete overlap of the cross-section of the through hole 131 with the cross-section of through hole 121 and the direction T whereas, in the direction h, there is only partial overlap. Likewise, there may be no overlap of a left part of through hole 131 with the cross-section of through hole 121 or there may be no overlap of a right part of through hole 131 with the cross-section of through hole 121 (when seen in the direction T). In general, the partial overlap of the cross-section of the through hole 131 and the cross-section of the through hole 121 may range between 10% to 100% of the cross-section of the through hole 131. Since the cross-section of the through hole 121, as depicted in figure 1c, is larger in area than the cross-section 131, the partial overlap may range between 10% to 80% of the cross-section of the through hole 121. Especially preferred is an embodiment, in which the overlap is 100% of the cross-section of the through hole 131 and 50% or less than 50% of the cross-section of the through hole 121. The percentage values always refer to the area of the respective cross-sections while, for simplicity, a percentage of the cross-sections is referred to.

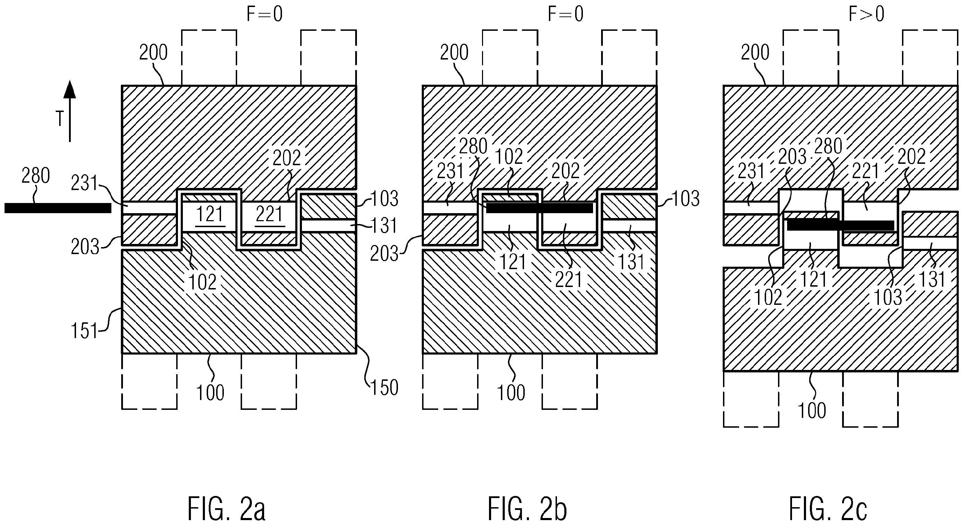

Figures 2a to 2c depict how an elongated rod 280 may be inserted in two adjacent conveyor belt modules 100 and 200. Each of the conveyor belt modules comprises a first rod receiving element 102 and 202, respectively, and an outermost rod receiving element 103 and 203, respectively. Each of these elements is provided with a corresponding through hole as described with reference to figures 1 a to 1 c. For simplicity, it is assumed that the shapes and dimensions of the rod receiving elements in the first conveyor belt module 100 and the second conveyor belt module 200 are identical. Furthermore, although not shown in figure 2, there may be more than one first rod receiving element 102 and 202, respectively, provided at each of the conveyor belt modules 100 and 200. Additionally, as depicted with dashed lines, second rod receiving elements and second outermost rod receiving elements may be provided on the corresponding opposite side of each conveyor belt module 100 and 200 for connecting the respective conveyor belt modules to other conveyor belt modules. These modules may be "mirrored" in that the second outermost rod receiving element is provided on the opposite side 151 of the conveyor belt module compared to the first outermost rod receiving element provided on the side 150. The second rod receiving elements may be correspondingly displaced with respect to the first rod receiving elements of each conveyor belt module.

The process depicted in figures 2a to 2c starts with figure 2a in which an elongated rod 280 is inserted into one of the outermost rod receiving elements. In the case of figure 2a and figure 2b, the conveyor belt modules 100 and 200 are placed in close proximity to each other as far as possible without applying any force in the direction T to the conveyor belt modules 100 and 200. This is denoted with F=0. As one example, the conveyor belt modules may be placed in the arrangement shown in figure 2a and 2b on a table or the like. In the situation depicted in figures 2a and 2b, the rod receiving elements of the first conveyor belt module 100 are placed in the corresponding recess of the adjacent second conveyor belt module 200. As already explained with respect to figure 1, the outermost rod receiving element and the first rod receiving element as well as potentially additional rod receiving elements of a given conveyor belt module are separated by a distance which is selected to correspond to the width of rod receiving elements of other conveyor belt modules such that the respective rod receiving elements of other conveyor belt modules can be placed in the respective recesses.

In the example shown in figure 2a, the elongated rod 280 is inserted into the through hole 231 of the outermost rod receiving element 203 of the conveyor belt module 200. In the case of each conveyor belt module 100 and 200 comprising an outermost rod receiving element with a corresponding through hole, it is clear that the elongated rod may also be inserted into the outermost rod receiving element and its respective through hole of the other conveyor belt module (in this case this would be the conveyor belt module 100).

Since the conveyor belt modules are formed such that the elongated rod 280 can be inserted, via the through hole of the conveyor belt module 200, into the through hole 121 of the other conveyor belt module 100 and into the through hole 221 of the conveyor belt module 202, the elongated rod 280 is placed within the respective through holes 121 and 221 in figure 2b. Still, no force acts upon the conveyor belt modules 100 and 200 in the direction T.

In the embodiment shown, the elongated rod placed in the through holes 121 and 221 could be removed via the through hole 231 through which it was inserted but cannot be removed through the through hole 131 since the movement of the elongated rod 280 and the direction of the through hole 131 is blocked by the material of the outermost rod receiving element 103 of the conveyor belt module 100. Therefore, the elongated rod is already secured partially in the position depicted in figure 2b at least with respect to a further movement in the direction of the outermost rod receiving element 103.

In figure 2c, a force F>0 is applied in the direction T to the conveyor belt modules. This may be a situation in which the conveyor belt comprising two or more conveyor belt modules is assembled and used in a machine for transporting objects. Due to the force acting upon the conveyor belt modules 100 and 200, the conveyor belt modules 100 and 200 are pulled away from each other. While the elongated rod cannot move further in the direction T due to its movement being blocked in this direction by the first rod receiving element 102, the conveyor belt module 200 can be moved in the direction T away from the conveyor belt module 100 until the movement of this conveyor belt module is blocked by the elongated rod 280 blocking the movement of the first rod receiving element 202 in the direction T as depicted in figure 2c. In this situation (which may be referred to as the working state of the conveyor belt), the elongated rod cannot be extracted from the conveyor belt module since its movement in the direction of the through holes 131 and 231 is blocked by the respective material of the outermost rod receiving elements 103 and 203, thus completely securing the elongated rod 280 inside the first rod receiving elements 102 and 202 and their respective through holes 121 and 221. As long as the force F is applied to the conveyor belt modules, the elongated rod 280 will be secured within the through holes 121 and 221 against further movement in a direction perpendicular to the direction T (for example the direction v depicted in figure 1).

Once the force F is returned to 0 and the conveyor belt modules are again brought into the relative position as depicted in figure 2a or 2b, the elongated rod can be extracted via one of the through holes 231 or 131 in order to once again separate the conveyor belt modules and dissemble the conveyor belt. Thereby, removing one or more conveyor belt modules and replacing them with other conveyor belt modules of the same type (for example in case they are broken or damaged in any other way or no longer suitable to be used in the conveyor belt) is simplified significantly and does not require destructive removal of the elongated rod (in that the conveyor belt modules that are not to be exchanged would have to be damaged in order to extract the elongated rod or the elongated rod would have to be damaged).

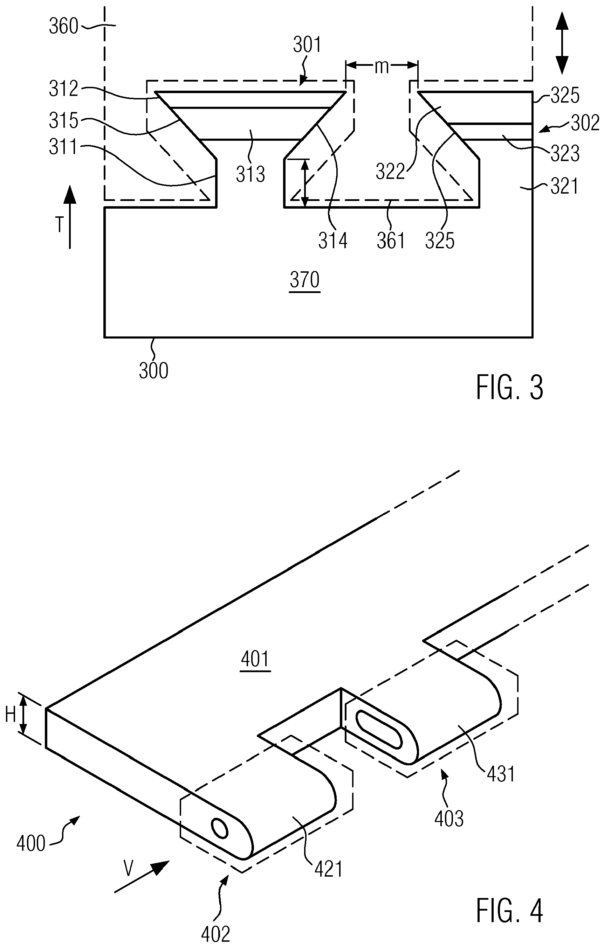

Figure 3 depicts one embodiment of rod receiving elements having a shape different from the rectangular embodiments shown with respect to figures 1 and 2. The conveyor belt module 300 is shown in connection with a conveyor belt module 360 (shown only in dashed lines) in order to appropriately show the behavior of the conveyor belt modules when connected to form a conveyor belt.

The conveyor belt module 300 comprises at least one first rod receiving element 301. The first rod receiving element 301, in this embodiment, comprises a through hole 313 extending from a surface 315 to an opposing surfaces 314 of the first rod receiving element 301. As depicted in figure 3, the opposing surfaces 314 and 315 are not parallel to each other as depicted with respect to figures 1 and 2. In contrast, the surfaces 315 and 314 come closer to each other the closer they are to the body 370 when seen in the direction T. At least part of the first rod receiving element 301 including the opposing surfaces 314 and 315 may therefore form a triangular or trapezoidal shape or body. The first rod receiving element 301 and especially the side surfaces 314 and 315 and the corresponding body 312 also comprising the through hole 313 may be connected to the body 370 of the conveyor belt module by a protrusion 311 having an extension d in the direction T.

Correspondingly, the outermost rod receiving element 302 may comprise a body 322 comprising the through hole extending from a surface 325 to a surface 326 as opposing surfaces. For the outermost rod receiving element, the surface 326, in contrast to the first rod receiving element 301, may not include an angle with the direction T. The surface 325, however, may include a corresponding angle with the direction T as the surface 315 of the first rod receiving element or another angle.

As can be seen in figure 3, the first rod receiving element 301 and the outermost rod receiving element 302 are separated by a minimum distance m at the upper edge of the conveyor belt module 300 depicted. The distance m may be smaller or equal to the minimum width of the protrusion 311 such that a conveyor belt module that is placed adjacent to the conveyor belt module 300 can be placed with its corresponding protrusion in this area of the conveyor belt module 300.

As can further be seen in figure 3, a second conveyor belt module 360 comprising a rod receiving element 361 may be inserted into the area at least partially surrounded by the first rod receiving element 301 and the outermost rod receiving element 302, for example by moving the second conveyor belt module 360 perpendicular to the plane depicted in figure 3. When a force (as described with respect to figure 2 in more detail) is applied to the conveyor belt modules in the direction T with an elongated rod being placed in the respective first rod receiving elements, the conveyor belt modules as depicted in figure 3 are also moved relative to each other. However, in this embodiment, the movement of the conveyor belt modules relative to each other is not only limited by the elongated rod placed within the respective first rod receiving elements but also by the shape of the first rod receiving elements and the outermost rod receiving elements of the conveyor belt modules 300 and 360, respectively. Indeed, once the opposing surfaces 314 and 315 as well as 325 of conveyor belt module 300 come in contact with the corresponding surfaces of the conveyor belt module 360, a movement of the conveyor belt modules 300 and 360 relative to each other in the direction T is prevented. Thereby, the stress applied to the elongated rod can be reduced during use of a conveyor belt comprised of conveyor belt modules as depicted in figure 3.

Figure 4 depicts a further embodiment of a conveyor belt module. In this embodiment, the body 401 may be provided as a cuboid. The outermost rod receiving element 402 and the first rod receiving element 403 may be provided as protrusions extending from the body 401. The body 401 itself and the rod receiving elements 402 and 403, respectively, may have a height H. The body 401 may further have a top surface and an opposing bottom surface as well as corresponding side surfaces. The same holds for the rod receiving elements 402 and 403 which also have the opposing surfaces through which the respective through holes (as described with respect, for example, to figure 1) are provided. Additionally, in this embodiment, a further surface 421 is provided for the outermost rod receiving element 402 and a surface 431 is provided for the first rod receiving element 403. These surfaces, respectively, have a circular or elliptical boundary when seen in the direction v as described with respect to figure 1 and thus connect to the top surface and the bottom surface of the outermost rod receiving element and the first rod receiving element, respectively. This allows, compared to a completely cuboid outermost rod receiving element and first rod receiving element, a simplified rotation around an axis of rotation defined by an elongated rod inserted into the rod receiving elements when the conveyor belt module is assembled, together with other conveyor belt modules of the same type, to a conveyor belt.

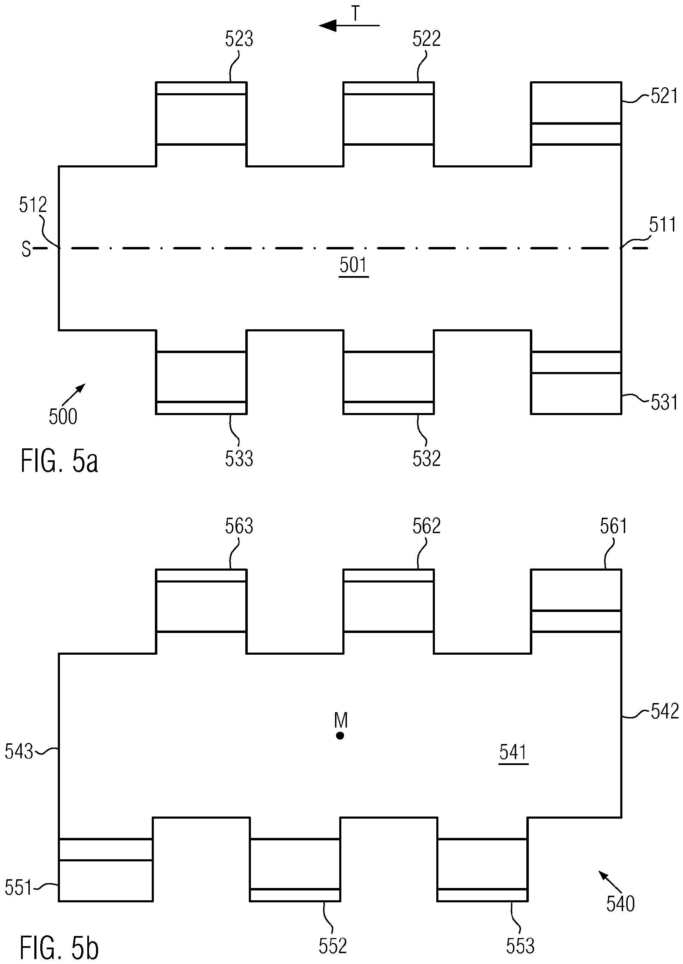

Figures 5a and 5b show further embodiments of conveyor belt modules in top view. It is noted that the embodiment described with respect to figures 5a and 5b can be combined with any embodiment of a conveyor belt module described previously with respect to figures 1, 2, 3 and 4.

In the embodiment depicted in figure 5a, the conveyor belt module 500 comprises a body 501. The body comprises a top surface (on which one presently looks when looking at figure 5) and a bottom surface opposite to the top surface. These surfaces may be planar or curved and further may be rectangular (as depicted) or may have any other shape. Furthermore, side surfaces (in figure 5a depicted as edges) 511 and 512 are provided extending from the top surface to the bottom surface. On the remaining opposite side surfaces, outermost rod receiving elements 521 and 531 are provided. In the embodiment shown in figure 5a, these outermost rod receiving elements are provided to begin at the very same edge 511 and extend in a direction v. A recess is provided separating the outermost rod receiving elements from the adjacent first rod receiving element 522 and 532, respectively. These, in turn, are separated by a further recess from the adjacent second rod receiving elements 523 and 533.

In the embodiment depicted in figure 5a, the conveyor belt module 500 is thus provided in a way that it is symmetric with respect to an axis of symmetry denoted with S. Deviations from this perfect symmetry depicted in figure 5a are encompassed by the embodiment depicted. In fact, the embodiment depicted in figure 5a is intended to show an embodiment in which the outermost rod receiving elements and the first and second and potentially further receiving elements are provided on either side of the conveyor belt module 500 in the same way, i.e. beginning at the same edge 511.

Figure 5b shows an alternative embodiment in which the body 541 of the conveyor belt module 540 is essentially provided in the same way as the body 501 of the conveyor belt module 500 of figure 5a. In contrast to the embodiment of figure 5a, however, the outermost rod receiving element 561 is provided some beginning at the edge 542 of body 541. The first and second rod receiving elements 562 and 563 are separated from each other and the outermost rod receiving element 561 by corresponding recesses as was already described previously, for example with respect to figure 5a.

The rod receiving elements provided on the opposing side surface of the body 541, however, are provided in an alternating fashion in that the outermost rod receiving element 551 is provided at the edge 553 of the body 541 and the first and second (and potentially further) rod receiving elements 552 and 553 are provided at this side separated from the outermost rod receiving element by a recess.

In the embodiment shown in figure 5b, a rod receiving element provided on one side of the body 541 is opposed by a recess on the opposing side surface of the body 541. As an example, the first rod receiving element 552 on the one side of the body 541 is opposed by a recess between the first rod receiving element 562 and the second rod receiving element 563 of the opposing side of the body 541. The same holds for the other rod receiving elements. The embodiment shown in figure 5b thus shows a conveyor belt module 540 having rotational symmetry (by a rotation of 180°) around the center of rotation denoted with M. Like for the embodiment depicted in figure 5a, this rotational symmetry does not necessarily need to be perfect in that there can be slight deviations also with respect to the form, size and shape of the respective recesses, rod receiving elements and the body 541 itself. In general, however, a conveyor belt module provided in accordance with the embodiment depicted in figure 5b should be provided in a way that the rod receiving elements provided on one side of the body 541 are opposed by recesses on the opposing surface of the body 541.

In the embodiment according to figure 5a, it is advantageous if the bottom surface and top surface of body 501 are made of the same material and have the same shape such that either the bottom surface or the top surface can be used to transport objects. This allows for using identical conveyor belt modules by simply rotating them around an axis of rotation perpendicular to the axis of symmetry S and within the image plane depicted in figure 5a. In the embodiment shown in figure 5b, however, the bottom surface of body 541 can be different from the top surface of body 541 and only the top surface can be suitable (for example coated with a specific material or the like) to transport objects. This is because conveyor belt modules according to the embodiment depicted in figure 5b can be used by simply rotating them around the axis of rotation depicted in order to assemble them to a conveyor belt.

Figure 6a to 6e depict further embodiments of through holes that can be provided in the outermost rod receiving element and/or first or additional rod receiving elements. In the following figures, the rod receiving elements are exemplified by cuboid portions extending from the body of a not further specified conveyor belt module according to one of the previously described embodiments. However, it is noted that the provision of the rod receiving element is not limiting. In fact, the following figures, especially the features related to the through holes, may be applied to any rod receiving element, especially the first and second as well as other rod receiving elements and to the outermost rod receiving elements described earlier.

In figure 6a, a rod receiving element 600 comprising a through hole 601 having the shape of a cylindrical bore is shown. The cylindrical bore results in two openings 611 and 612 being provided on opposite sides of the rod receiving element. The hollow portion within the rod receiving element constituting the bore has a diameter d which is equal in any direction perpendicular to the longitudinal axis L of the bore. The diameter of the bore can range from some millimeters, like 3 mm, to 5 mm or even 10 or 20 mm. Other values, especially smaller or larger values as well as values in between the previously mentioned values are of course possible. In any case, the diameter of the bore should be such that an elongated rod can be introduced without difficulties. The embodiment shown in figure 6a, although applicable to any rod receiving element, may be preferred for the outermost rod receiving elements in order to minimize the risk of the elongated rod introduced into the conveyor belt module dropping out of the rod receiving element unintentionally.

In figure 6b, a further embodiment is shown in which the through hole 602 in the rod receiving element has the shape of a cylinder with elliptical bottom and top surfaces. The half axis of the respective ellipses are provided by e and f. Preferably, the half axis e is larger than the half axis f, preferably two times larger than the half axis f. The through hole according to the embodiment of figure 6b is preferably provided in first, second or other rod receiving elements different from the outermost rod receiving element. This is because the elliptical shape of the through hole allows for an elongated rod introduced being moved within the through hole in a direction parallel to the half axis e.

In a preferred alternative, the bottom and top surfaces of the cylinder are not perfectly elliptical but are provided by two parallel lines connected, on either side, by a circular segment. Thereby, the distance between the two parallel lines is maintained over the whole length of these two parallel lines, in contrast to an ellipse. In combination with a through hole in the outermost rod receiving element as described with respect to figure 6a, it is advantageous if the distance between the two parallel lines equals the diameter d. By combining the embodiment of figure 6a for the outermost rod receiving element with the embodiment of figure 6b as described above for a first, second or other rod receiving element different from the outermost rod receiving element, insertion of the elongated rod can be simplified while the movement of the elongated rod within the first, second or other rod receiving element different from the outermost rod receiving element is guaranteed.

In the embodiment according to figure 6c, a rod receiving element 600 is shown in which the through hole 603 has a conical form with a first opening 631 having a first diameter d1 larger than the second diameter d2 of the second opening 632 on the opposite side of the rod receiving element. This embodiment can be preferable for outermost rod receiving elements as long as the diameter d2 at least equal to the diameter of the elongated rod or larger if the elongated rod is provided as a cylinder. This is because this embodiment allows for easy introduction of the elongated rod into the outermost rod receiving element if the elongated rod is introduced into the outermost rod receiving element via the opening 631. Further, through the conical shape of the through hole, the elongated rod is guided to the second opening 632.

In the embodiment shown in figure 6d, a through hole 604 is provided that is formed by two cylinders concentrically arranged but displaced in the direction of the longitudinal axis and connected to each other. In the embodiment shown, the first cylinder extending from the opening 641 to the surface 645 has a diameter d3. The second cylinder extending from the opening 643 to the opening 642 on the opposite surface of the rod receiving element 600 compared to the surface in which the opening 641 is provided has a diameter d4 smaller than the diameter d3. The opening 643 is provided within the surface 645 such that a connection between the first cylinder and the second cylinder (respectively larger and smaller cylinder) is made through which an elongated rod can be inserted. Assuming that the diameter d4 is larger or at least equal to the diameter of an elongated rod to be inserted, this embodiment allows, for example, to maintain a grip around the elongated rod until it is completely inserted into an outermost rod receiving element.

It is noted that the embodiment depicted in figure 6d may also be combined with the embodiment shown in figure 6a and 6b or figure 6c by connecting two cylinders with elliptical bottom and top surface or two conical through holes with corresponding properties with each other.

While the previous embodiment is only related to realizations of the through hole by geometrical objects having at least partial rotational symmetry, other embodiments can also be provided.

This refers to irregular shapes of the cross-section of the through hole. For example, figure 6e shows an embodiment in which the through hole 605 within the rod receiving element is provided as a geometrical object having a cross-section formed by a half circle and a triangle connected to each other. This can be used, for example, in cases where the elongated rod to be inserted is not a simple cylinder but has another shape comprising one or more edges. In fact, the cross-section may be provided by a combination of any regular or not regular polygon and circle section. Such embodiments may be preferred in case a rotation of connected conveyor belt modules is unintended and should be prevented. This can be achieved by using elongated rods having polygonal cross-sections.

## Claims

1. Conveyor belt module comprising:
a body;
a first rod receiving element extending laterally from the body and comprising two substantially opposing surfaces;
wherein a through hole is provided extending from the first surface to the second surface and a longitudinal axis of the through hole extending from the first surface to the second surface in perpendicular to a conveying direction of the conveyor belt module; wherein
the through hole has an extension perpendicular to the longitudinal axis and in parallel to the conveying direction of the conveyor belt module;
an outermost rod receiving element extending laterally from the body and comprising two substantially opposing surfaces;
wherein a through hole is provided extending from the third surface to the fourth surface and a longitudinal axis of the through hole extending from the third surface to the fourth surface in parallel to the longitudinal axis of the first rod receiving element; wherein the through hole has a extension perpendicular to the longitudinal axis and in parallel to the conveying direction of the conveyor belt module;
wherein the extension of through hole of the outermost rod receiving element is smaller than the extension of the through hole of the first rod receiving element; and
wherein the cross-sections perpendicular to the longitudinal axes of the through hole in the outermost rod receiving element and the through hole in the first rod receiving element overlap partially in a view along the direction of the longitudinal axis.

2. Conveyor belt module according to claim 1, wherein the through hole in the outermost rod receiving element has a cylindrical shape with a circular cross-section perpendicular to the longitudinal axis of the through hole in the outermost rod receiving element and/or the through hole in the first rod receiving element has a cylindrical shape with an elliptical cross-section perpendicular to the longitudinal axis of the through hole in the first rod receiving element.

3. Conveyor belt module according to claim 1, wherein the extension of the through hole of the first rod receiving element and/or the extension of the through hole of the outermost rod receiving element varies or is constant or is at least partially constant in the direction of the longitudinal axis.

4. Conveyor belt module according to any of claims 1 to 3, wherein the body has a substantially planar top surface and a substantially planar bottom surface and a height H, wherein the first rod receiving element and/or the outermost rod receiving element extend laterally from the body and have a substantially planar top surface and a substantially planar bottom surface with the height H and further have a fifth surface different from the bottom surface, the top surface and the opposing surfaces, the fifth surface having a semi-circle boundary or a semi-elliptical boundary perpendicular to the longitudinal axis.

5. Conveyor belt module according to any of claims 1 to 4, wherein the two substantially opposing surfaces of the first rod receiving element and/or the two substantially opposing surfaces of the outermost rod receiving element are in parallel to each other or come closer to each other with decreasing distance to the body.

6. Conveyor belt module according to any of claims 1 to 5, wherein the cross-section of the through hole of the outermost rod receiving element completely overlaps with the cross-section of the through hole in the first rod receiving element in the direction of the longitudinal axis.

7. Conveyor belt module according to any of claims 1 to 6, wherein the conveyor belt module comprises a plurality of first rod receiving elements.

8. Conveyor belt module according to claim 7, wherein each rod receiving element is separated from a directly adjacent rod receiving element by a distance s.

9. Conveyor belt module according to any of claims 1 to 8, wherein the conveyor belt module comprises a second rod receiving element and a second outermost rod receiving element extending laterally from the body on an opposite side of the body as the first rod receiving element and the outermost rod receiving element.

10. Conveyor belt comprising at least two conveyor belt modules according to claim 9 and an elongated rod, wherein the rod extends through the first rod receiving element of a first conveyor belt module and the second rod receiving element of a second conveyor belt module adjacent to the first conveyor belt module, wherein the extension of the elongated rod is equal to or smaller than the extension of the through holes of the first and second outermost rod receiving elements.
